# EUROPÄISCHE PATENTSCHRIFT

(11) **EP 1 153 640 B1**
(45) Veröffentlichungstag und Bekanntmachung des Hinweises auf die Patenterteilung: **07.10.2009**
(21) Anmeldenummer: 01810358.0
(22) Anmeldetag: 10.04.2001
(51) Int. Cl.: B01D 3/00, B01D 53/18, F28F 25/02, B01J 10/00

(54) **Behälter mit Leitorgan für einen umzulenkenden Flüssigkeitsstrahl**
Container having a deflector for diverting a liquid jet
Récipient à déflecteur pour dériver un jet de liquide

(30) Priorität: 08.05.2000 EP 00810389
(43) Veröffentlichungstag der Anmeldung: 14.11.2001
(73) Patentinhaber: Sulzer Chemtech AG, 8404 Winterthur (CH)
(72) Erfinder: Bachmann, Christian, 8548 Ellikon/Thur (CH); Fehr, Emil, 8415 Berg am Irchel (CH); Faust, Adrian, 8362 Balterswil (CH)
(74) Vertreter: Sulzer Management AG

(56) Entgegenhaltungen:
- WO-A-96/26778
- WO-A-99/06130

## Beschreibung

Die Erfindung betrifft einen Behälter mit Leitorgan für einen umzulenkenden Flüssigkeitsstrahl gemäss Oberbegriff von Anspruch 1. Sie bezieht sich auch auf Gegenstromkolonnen mit Flüssigkeitsverteilern, bei denen die Flüssigkeit über Leitorgane der genannten Art abfliesst, sowie Verwendungen Leitorgane enthaltender Apparate, die für Prozesse in der chemischen Industrie und Petrochemie und/oder beispielsweise für Zerlegungen von Gasgemischen verwendet werden können, insbesondere für Destillation, Reaktivdestillation, Absorption oder Extraktion, wobei Stoff- und Wärmeaustauschprozesse sowie chemische Reaktionen stattfinden oder stattfinden können.

In einer Gegenstromkolonne, in der beispielsweise eine destillative Stofftrennung mittels einer geordneten Packung durchgeführt wird, kann ein Gas mit grosser Geschwindigkeit durch die Packung nach oben strömen. Bei Verwendung von ungeeigneten Flüssigkeitsverteilern trennt das schnell strömende Gas feine Tropfen vom Verteiler ab und reisst diese mit sich fort. Die zu verteilende Flüssigkeit gelangt daher nicht verlustfrei auf die Packung. Aus der EP 0 282 753 ist ein Flüssigkeitsverteiler bekannt, bei dem Flüssigkeit aus Austrittsöffnungen von Verteiltrögen austreten und auf Prallplatten von Leitorganen (dort Leitwände genannt) strahlförmig auftreffen. Die Flüssigkeit gelangt im Leitorgan mit einer relativ hohen Geschwindigkeit auf die Prallplatte, verteilt sich auf dieser als parabelförmiger Film und strömt anschliessend von einer Abtropfkante auf die Packung. Eine Mehrzahl von parallelen Verteiltrögen unterteilt das aus der Packung nach oben strömende Gas in mehrere Teilströme, zwischen denen sich Stauzonen ausbilden. Die Abtropfkanten der Leitorgane sind unter dem Verteiltrögen innerhalb der Stauzonen der Gasströmung angeordnet. Dadurch wird weitgehend verhindert, dass Tröpfchen vom Gasstrom mitgerissen werden.

Ein Nachteil der bekannten Leitorgane ist, dass sie die Querschnittsfläche, die zwischen den Verteiltrögen für den Transport des Gases zur Verfügung steht, relativ stark einengen und dass sie so eine mit der Einengung verbundene Erhöhung des Druckverlusts verursachen.

Aufgabe der Erfindung ist es, einen Behälter mit Leitorgan zu schaffen, mit dem die Flüssigkeit nach Ausströmen aus einem Behälter auf ein unter dem Behälter angeordnetes Ziel umlenkbar ist und mit dem - verglichen mit dem bekannten Leitorgan - ein grösserer Anteil des Querschnitts für den Gastransport verfügbar ist. Dabei muss gleichzeitig dafür gesorgt werden, dass keine Spritzer entstehen, die durch die Gasströmung mitgerissen werden können. Diese Aufgabe wird durch das im Anspruch 1 definierte Leitorgan gelöst. Mit der Vergrösserung des für den Gastransport zur Verfügung stehenden Querschnitts wird auch die Strömungsgeschwindigkeit vermindert, was die Gefahr eines Mitreissens von Flüssigkeitströpfchen zusätzlich reduziert. Gleichzeitig ermöglicht das erfindungsgemässe Leitorgan, sehr grosse Flüssigkeitsmengen auszutragen, ohne dass Rückstaueffekte auftreten.

Der erfindungsgemässe Behälter mit Leitorgan für einen umzulenkenden Flüssigkeitsstrahl erlaubt es, eine Flüssigkeit nach Ausströmen aus einem Behälter auf ein unter dem Behälter angeordnetes Ziel umzulenken. Das Umlenken erfolgt mittels einer geformten Materialplatte, die vor einer Austrittsöffnung des Behälters angeordnet ist und die den Strahl derart umformt und weiterleitet, dass die Flüssigkeit an einem unteren Ende der geformten Materialplatte dem Ziel zugeführt wird. Am Ort vor der Austrittsöffnung, wo der Flüssigkeitsstrahl auf die geformte Materialplatte auftrifft, bilden ein erstes sowie ein zweites Flächenstück der Materialplatte einen Mündungsbereich, in dem das erste Flächenstück die Flüssigkeit bezüglich der Vertikalen transversal umlenkt, während das zweite Flächenstück als Fänger für Spritzer vorgesehen ist. Das erste Flächenstück geht in einen Kanal über, in dem die Flüssigkeit nach unten geleitet wird. Dabei teilt die Wand des zweiten Flächenstücks den Kanal vom Mündungsbereich ab. Das Leitorgan kann in modifizierter Form auch aus einer Mehrzahl von geformten Materialplatten zusammengesetzt sein.

Der Behälter ist auch für Kolonnenböden verwendbar, die sich zwischen Füllkörperabschnitten einer Kolonnenpackung befinden. Bei diesen Kolonnenböden hat ein Flüssigkeitssammler - beispielsweise ein Kaminbodensammler - gleichzeitig die Funktion eines Flüssigkeitsverteilers. Die erfindungsgemässen Behälter können im Innenraum von gasleitenden Kaminen vor Ausflusslöchem angeordnet sein, die sich in vertikalen Kaminwänden befinden.

Die abhängigen Ansprüche 2 bis 5 betreffen vorteilhafte Ausführungsformen des erfindungsgemässen Behälters. Gegenstromkolonnen mit solchen Behältern sind jeweils Gegenstand der Ansprüche 6 bis 9. Anspruch 10 bezieht sich auf Verwendungen von Kolonnen oder von Behälter mit Leitorganen enthaltenden Apparaten.

Nachfolgend wird die Erfindung anhand der Zeichnungen erläutert. Es zeigen:
- Fig. 1: ein erfindungsgemässer Behälter,
- Fig. 2: eine schematische Darstellung eines Leitorgans, das über einer Packung an einem Verteilertrog angebracht ist,
- Fig. 3: das Leitorgan der Fig. 1 mit Befestigungsmitteln,
- Fig. 4: einen Querschnitt durch das Leitorgan,
- Fig. 5: diverse Querschnitte durch Leitorgane mit jeweils spiralförmigem Profil,
- Fig. 6: ein Leitorgan mit seitlichen Ausbuchtungen,
- Fig. 7: Teil eines Leitorgans, das am unteren Ende konisch ausgebildet ist,
- Fig. 8: ein Leitorgan, das über seine ganze Höhe konisch ausgebildet ist,
- Fig. 9: einen Abschnitt eines "Zwillings-Leitorgans",
- Fig. 10: ein Profil eines "Ringspalt-Leitorgans",
- Fig. 11-13: Profile zu Leitorganen, die aus zwei geformten Metallplatten zusammengesetzt sind und
- Fig. 14: ein Profil eines dreiteiligen Leitorgans.

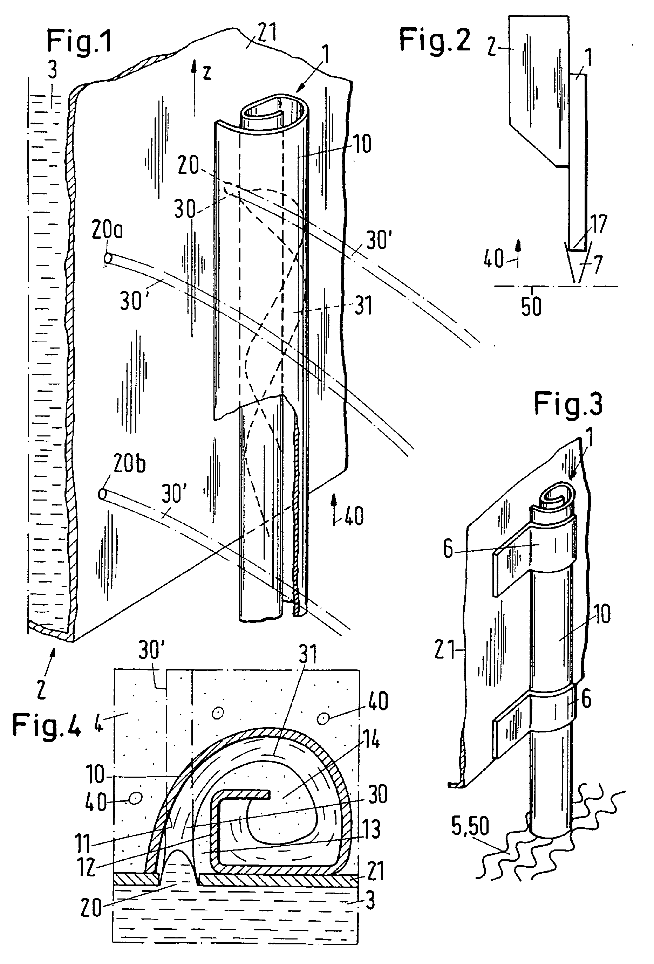

Fig. 1 zeigt ein Leitorgan 1, das an einem Behälter 2, einem Verteilertrog, angebracht ist. Fig. 2 ist eine schematische Darstellung zu einer Verwendung des Leitorgans 1, das an dem Verteilertrog 2 über dem oberen Ende 50 einer Kolonnenpackung 5 (siehe Fig. 3) angebracht ist. Mit einem Pfeil 40 ist die Strömung eines im Gegenstrom geführten Gases angedeutet. Der Boden des Behälters 2 kann auf einer horizontalen Ebene liegen; er kann auch - wie in Fig. 2 dargestellt- geneigt ausgebildet sein, um der Gasströmung 40 einen kleineren Widerstand entgegen zu setzen.

Eine Flüssigkeit 3, die aus Austrittsöffnungen 20, 20a und 20b als Strahlen 30 aus dem Behälter 2 austritt, bildet bei fehlenden Leitorganen 1 Flüssigkeitsstrahlen 30', die strichpunktiert dargestellt sind. Mit dem Leitorgan 1 wird die Flüssigkeit 3 nach dem Ausströmen auf ein unter dem Behälter 2 angeordnetes Ziel umgelenkt. Das Ziel ist die Packung 5 oder eine am unteren Ende 17 des Leitorgans 1 angeordnete Feinverteileinrichtung 7. Das Leitorgan 1 kann mit beispielsweise bridenartigen Befestigungsmitteln 6 fest oder demontierbar an der Wand 21 des Behälters 2 angebracht sein. Eine demontierbare Befestigung ist in Hinsicht auf eine Reinigung des Behälters 2 vorteilhaft.

Das Umlenken des Flüssigkeitsstrahls 30 erfolgt mittels einer geformten Materialplatte 10, die vor der Austrittsöffnung 20 des Behälters 2 angeordnet ist und die den Strahl 30 derart umformt und weiterleitet, dass die Flüssigkeit 3 am unteren Ende 17 der Materialplatte 10 dem Ziel 5 oder 7 zugeführt wird.

Wie die Fig. 4 anhand eines Querschnitts zeigt, dessen Schnittebene sich senkrecht zur Vertikalen (z-Richtung, Fig. 1) erstreckt, trifft der Flüssigkeitsstrahl 30 in einem Mündungsbereich 13 auf die geformte Materialplatte 10 auf. Dieser Mündungsbereich 13 wird vor der Austrittsöffnung 20 von einem ersten Flächenstück 11 und einem zweiten Flächenstück 12 gebildet. Das erste Flächenstück 11 lenkt die Flüssigkeit 3 bezüglich der Vertikalen transversal um, wobei sich ein Strom 31 ausbildet. Das zweite Flächenstück 12 hat die Funktion eines Fängers für Spritzer, die auf diesem Flächenstück 12 auftreffen und an ihm als Flüssigkeitsfilm abfliessen. Das erste Flächenstück 11 geht in einen Kanal 14 über, in dem die Flüssigkeit 3 nach unten geleitet wird. Das Leitorgan 1 schirmt die Flüssigkeit 3 gegen ein im Gegenstrom geführtes Gas 4. Dabei versperren der Flüssigkeitsstrahl 30 und der Strom 31 dem Gas 4 innerhalb des Leitorgans 1 teilweise den Weg, so dass die Gasströmung 40 weitgehend auf den Aussenbereich beschränkt ist, wo es keinen Kontakt zwischen Gas 4 und Flüssigkeit 3 gibt.

Es kann eine Austrittsöffnung 20 oder es können zwei Austrittsöffnungen 20a und 20b oder auch mehr vorgesehen sein. Liegt eine Mehrzahl von Austrittsöffnungen vor, so sind diese in der Regel senkrecht übereinander angeordnet.

Die Wand des zweiten Flächenstück 12 hat auch eine Trennfunktion: Liegt eine Mehrzahl von Austrittsöffnungen 20a, 20b vor, so hält die Wand des Flächenstücks 12 den Strom 31 von den weiter unten austretenden Strömen 30 fern.

Das erste Flächenstück 11 ist bezüglich der Austrittsöffnung 20 oder den Austrittsöffnungen 20a, 20b so angeordnet, dass der austretende Flüssigkeitsstrahl 30 angenähert tangential auf die Materialplatte 10 auftrifft. Anschliessend durchströmt die Flüssigkeit 3 als Strom 31 den Kanal 14. Die Strömung des Stroms 31 hat zumindest in einem oberen Teil des Leitorgans 1 eine wendelartige Form.

Die geformte Materialplatte 10 weist - in einer Ebene quer zur Vertikalen oder Längsrichtung des Kanals 14 - einen Querschnitt mit spiralförmigem Profil auf.

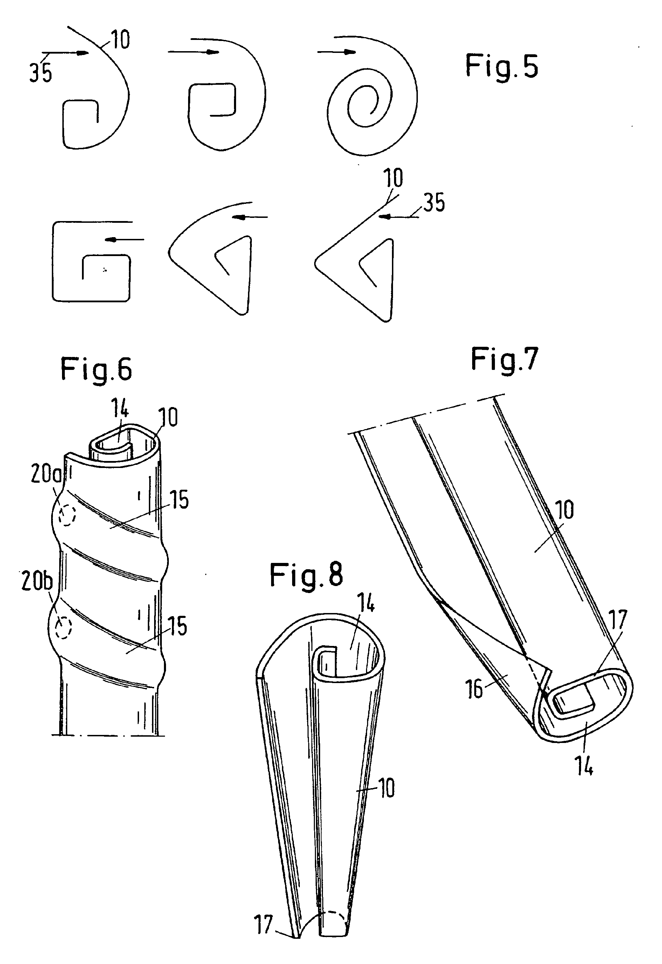

Verschiedene Beispiele sind in Fig. 5 dargestellt. Ein Pfeil 35 gibt jeweils den Ort und die Richtung der einströmenden Flüssigkeit 3 an.

Das Leitorgan 1 kann einen variabel ausgebildeten Querschnitt aufweisen. Es kann auf dem Niveau der Austrittsöffnung 20 eine seitliche Ausbuchtung haben, die zu einer Lenkung der Strömung 31 (Fig. 1, 4) vorgesehen ist. Fig. 6 zeigt ein Beispiel mit Ausbuchtungen 15 für zwei Flüssigkeitsstrahlen, die aus den Austrittsöffnungen 20a und 20b ausfliessen. Um das Gas 4 von einem Einströmen in den Mündungsbereich 13 oder in den Kanal 14 weitgehend abzuhalten und um den Strahl 31 in eine kompakte Form zu bringen, kann das Leitorgan 1 so ausgebildet werden, dass der Querschnitt sich gegen unten verjüngt. Dabei kann die Verjüngung nur in einer Umgebung 16 des unteren Endes 17, siehe Fig. 7, oder über die ganze Höhe, siehe Fig. 8, vorgesehen sein. Dank der kompakten Form bietet der Strahl 31 dem Gasgegenstrom 40 weniger Angriffsfläche.

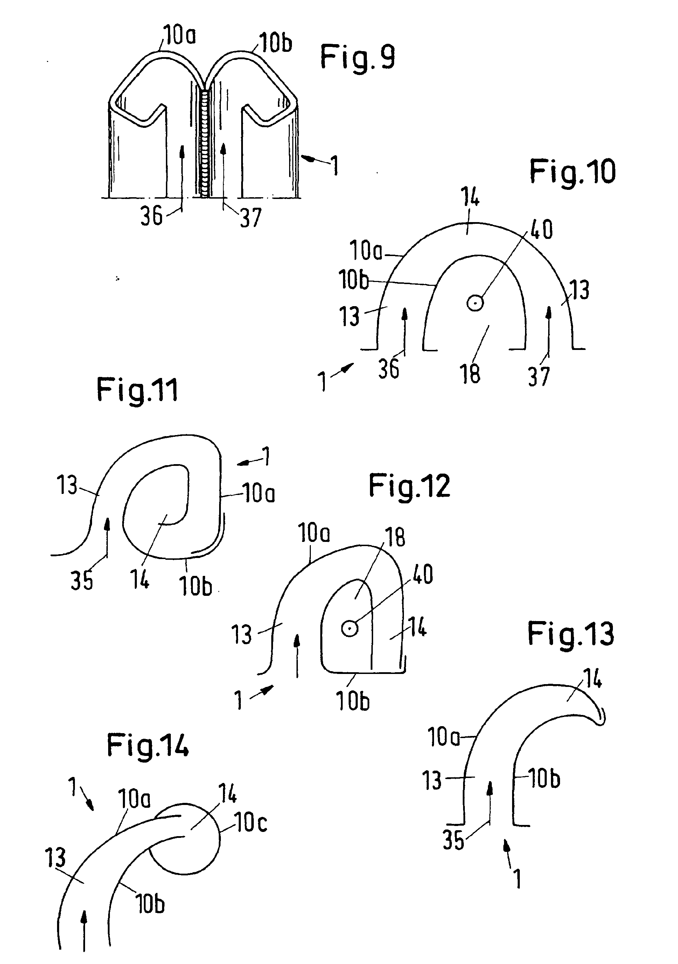

Das Leitorgan 1 kann aus zwei oder mehr geformten Materialplatten zusammengesetzt sein. Die Figuren 9 bis 14 zeigen verschiedene Beispiele. Beim Ausführungsbeispiel der Fig. 9 sind zwei Leitorgane mit geformten Materialplatten 10a und 10b der oben beschriebenen Art zu einem "Zwillings-Leitorgan" 1 zusammengeschweisst. Mit diesem Leitorgan 1 können zwei benachbarte, auf gleichem Niveau austretende Flüssigkeitsstrahlen 36 und 37 umgelenkt werden. (Das "Zwillings-Leitorgan" 1 kann auch aus einer einzigen Materialplatte 10 geformt sein.)

Das Ausführungsbeispiel der Fig. 10 ist ebenfalls für zwei Flüssigkeitsstrahlen 36 und 37 vorgesehen. Sein Querschnittsprofil zeigt einen ringspaltförmigen Kanal 14, in den die Flüssigkeit 3 von den Seiten her in zwei gegeneinander gerichteten Strömen eintritt. Ein zentraler Bereich 18 des Leitorgans 1 bleibt frei von Flüssigkeit 3. In diesem Bereich 18 kann ein Strom 40 des Gases 4 unbehindert durchgelassen werden.

Das Leitorgan 1 in der Fig. 11 hat einen spiralförmigen Querschnitt und ist durch zwei Materialplatten 10a und 10b zusammengesetzt. Eine Variante zeigt Fig. 12, bei der allerdings wie bereits im Beispiel der Fig. 10 ein zentraler Bereich 18 mit durchgelassenem Gasstrom 40 vorliegt. Eine weitere zweiteilige Variante ist in Fig. 13 dargestellt. Das Leitorgan 1 der Fig. 14 ist aus drei Teilen zusammengesetzt: der Mündungsbereich 13 ist durch die Materialplatten 10a und 10b gebildet, der Kanal 14 durch ein seitlich geschlitztes Rohr 10c.

Die Mündungsbereiche 13 der Leitorgane 1 sind in den Beispielen der Figuren 11 bis 14 jeweils als eine gekrümmte Gasse ausgebildet. Deren horizontale Breite muss grösser als der Durchmesser der zugeordneten Austrittsöffnung 20 des Behälters 2 sein. Mit Vorteil ist die Gassenbreite angenähert gleich dem Durchmesser der Austrittsöffnung 20, so dass dem nach oben strömenden Gas 4 innerhalb des Leitorgans 1 der Weg praktisch vollständig abgeschnitten ist.

## Patentansprüche

1. Behälter (2) umfassend ein Leitorgan (1) für einen umzulenkenden Flüssigkeitsstrahl (30), mit dem eine Flüssigkeit (3) nach Ausströmen aus dem Behälter (2) auf ein unter dem Behälter angeordnetes Ziel (5; 7) umlenkbar ist, wobei das Umlenken mittels mindestens einer geformten Materialplatte (10; 10a, 10b) erfolgt, die vor einer Austrittsöffnung (20) des Behälters (2) angeordnet ist und die den Flüssigkeitsstrahl (30) derart umformt und weiterleitet, dass die Flüssigkeit (3) an einem unteren Ende (17) der geformten Materialplatte dem Ziel zugeführt wird,
**dadurch gekennzeichnet, dass** am Ort vor der Austrittsöffnung (20) ein erstes Flächenstück (11) der Materialplatte (10, 10a) sowie ein zweites Flächenstück (12) der gleichen oder einer weiteren Materialplatte (10, 10b) einen Mündungsbereich (13) bilden, in dem das erste Flächenstück (11) die Flüssigkeit (3) bezüglich der Vertikalen transversal umlenkt, während das zweite Flächenstück (12) als Fänger für Spritzer vorgesehen ist, und dass das erste Flächenstück in einen Kanal (14) übergeht, in dem die Flüssigkeit nach unten geleitet wird, wobei der Kanal (14) vom Mündungsbereich (13) durch eine Wand des zweiten Flächenstücks (12) abgeteilt ist.

2. Behälter nach Anspruch 1, **dadurch gekennzeichnet, dass** das erste Flächenstück (11) bezüglich der Austrittsöffnung (20) so angeordnet ist, dass der austretende Flüssigkeitsstrahl (30) zumindest angenähert tangential auf die Materialplatte (10) auftrifft und anschliessend den Kanal (14) wendelartig durchströmt, und dass mehr als eine Austrittsöffnung (20a, 20b) vorgesehen sein können, wobei diese insbesondere senkrecht übereinander angeordnet sind.

3. Behälter nach Anspruch 1 oder 2, **dadurch gekennzeichnet, dass** die geformte Materialplatte (10) - quer zur Längsrichtung des Kanals (14) - einen Querschnitt mit spiralförmigem Profil aufweist.

4. Behälter nach einem der Ansprüche 1 bis 3, **dadurch gekennzeichnet, dass** die geformte Materialplatte (10) einen Querschnitt aufweist, der in Längsrichtung des Kanals (14) zumindest teilweise variabel ausgebildet ist, wobei insbesondere das erste Flächenstück auf dem Niveau der Austrittsöffnung (20a, 20b) eine seitliche Ausbuchtung (15) aufweist und/oder der Querschnitt sich gegen unten verjüngt und die Verjüngung über die ganze Höhe in der Längsrichtung oder nur in einer Umgebung des unteren Endes (17) vorgesehen ist.

5. Behälter nach einem der Ansprüche 1 bis 4, **dadurch gekennzeichnet, dass** es aus zwei oder mehr geformten Materialplatten (10a, 10b, 10c) zusammengesetzt ist.

6. Gegenstromkolonne mit Behältern (2) eines Flüssigkeitsverteilers gemäss einem der Ansprüche 1 bis 5, aus denen Flüssigkeit (3) gegen einen aufwärts gerichteten Gasstrom (40) auf einen Füllkörper (5) oder einen Füllkörperabschnitt einer Kolonnenpackung verteilbar ist und an denen die Leitorgane vor Austrittsöffnungen (20) angeordnet sind, wobei aus den Austrittsöffnungen strömende Flüssigkeitsstrahlen (30) mittels der Leitorgane gezielt auf den Füllkörper oder auf über dem Füllkörper angeordnete Feinverteilelemente (7) umlenkbar ist.

7. Kolonne nach Anspruch 6, **dadurch gekennzeichnet, dass** die Mündungsbereiche (13) der Leitorgane (1) jeweils als eine gekrümmte Gasse ausgebildet sind, deren horizontale Breite grösser als der Durchmesser der zugeordneten Austrittsöffnung des Behälters ist, und/oder dass diese Breite mit Vorteil angenähert gleich dem genannten Durchmesser ist.

8. Kolonne nach Anspruch 6 oder 7, **dadurch gekennzeichnet, dass** die Leitorgane (1) demontierbar an den Behältern (2) des Flüssigkeitsverteilers angebracht sind.

9. Kolonne nach einem der Ansprüche 6 bis 8, **dadurch gekennzeichnet, dass** ein Boden zwischen einem oberen und einem unteren Füllkörperabschnitt angeordnet ist, mit welchem Boden Flüssigkeit aus dem oberen Abschnitt in einem Pufferraum gesammelt und gesammelte Flüssigkeit auf den unteren Abschnitt verteilt wird, dass Kamine als Passagen für einen Gastransport durch den Pufferraum dienen und dass die Leitorgane vor Austrittsöffnungen innerhalb der Kamine angeordnet sind.

10. Verwendung einer Kolonne gemäss einem der Ansprüche 6 bis 9 oder eines Apparates mit Behälter gemäss einem der Ansprüche 1 bis 5, zur Durchführung von Prozessen in der chemischen Industrie und Petrochemie oder beispielsweise zu einer Zerlegung von Gasgemischen, insbesondere zur Durchführung einer Destillation, Reaktivdestillation, Absorption oder Extraktion, wobei Stoff- und/oder Wärmeaustauschprozesse sowie chemische Reaktionen stattfinden oder stattfinden können.

## Claims

1. A container (2) including a guide member (1) for a liquid jet (30) to be deflected, by means of which a liquid (3) can be deflected after flowing out of the container (2) onto a target (5; 7) which is located below the container (2), with the deflecting taking place by means of at least one shaped material plate (10; 10a, 10b) which is arranged ahead of an outlet opening (20) of the container and which reshapes and further conducts the liquid jet (30) in such a manner that the liquid (3) is conveyed at a lower end (17) of the shaped material plate to the target,
**characterized in that** at the location ahead of the outlet opening (20) a first piece of surface (11) of the material plate (10; 10a) and a second piece of surface (12) of the same or of a further material plate (10; 10b) form a mouth region (13) in which the first piece of surface (11) deflects the liquid (3) transversely with respect to the vertical, whereas the second piece of surface (12) is provided as a catcher for squirts; and **in that** the first piece of surface merges into a channel (14) in which the liquid is guided downwards whereby the channel (14) is divided off from the mouth region by a wall of the second piece of surface (12).

2. Container in accordance with claim 1, **characterized in that** the first piece of surface (11) is arranged with respect to the outlet opening (20) in such a manner that the emerging liquid jet (30) is incident at least approximately tangentially onto the material plate (10) and then flows helically through the channel (14); and **in that** more than one outlet opening (20a, 20b) can be provided, with the latter in particular being arranged vertically one above the other.

3. Container in accordance with claim 1 or claim 2, **characterized in that** transversely to the longitudinal direction of the channel (14) the shaped material plate (10) has a cross-section with a spiral-shaped profile.

4. Container in accordance with any one of the claims 1 to 3,
**characterized in that** the shaped material plate (10) has a cross-section which is formed to be at least partly variable in the longitudinal direction of the channel (14), with in particular the first piece of surface having a lateral outward bulge (15) at the level of the outlet opening (20a, 20b) and/or the cross-section contracting downwardly and with the contraction being provided over the entire height in the longitudinal direction or only in a vicinity of the lower end (17).

5. Container in accordance with any one of the claims 1 to 4,
**characterized in that** it is assembled from two or more shaped material plates (10, 10a, 10b).

6. Counter-flow column comprising containers (2) of a liquid distributor including guide members (1) in accordance with any one of the claims 1 to 5 from which liquid (3) can be distributed against an upwardly directed gas flow (40) onto a filler body (5) or a filler body section of a column packing and at which the guide members are arranged ahead of outlet openings (20), with liquid jets (30) which flow out of the outlet openings being intentionally deflectable by means of the guide members onto the filler body or onto fine distributor elements (7) which are arranged above the filler body.

7. Column in accordance with claim 6, **characterized in that** the mouth regions (13) of the guide members (1) are in each case formed as a curved alley, the horizontal width of which is greater than the diameter of the associated outlet opening of the container; and/or **in that** this width is advantageously approximately equal to the named diameter.

8. Column in accordance with claim 6 or claim 7, **characterized in that** the guide members (1) are removably attached to the containers (2) of the liquid distributor.

9. Column in accordance with any one of the claims 6 to 8,
**characterized in that** a base is arranged between an upper and a lower filler body section, by means of said base liquid is collected from the upper section in a buffer chamber and collected liquid is distributed onto the lower section; **in that** flues serve as passages for a gas transport through the buffer chamber; and **in that** the guide members are arranged ahead of outlet openings within the flues.

10. Use of a column in accordance with any one of the claims 6 to 9 or of an apparatus with containers in accordance with any one of the claims 1 to 5, for carrying out processes in the chemical industry and in petrochemistry or for example for a decomposition of gas mixtures, in particular for carrying out a distillation, reactive distillation, absorption or extraction, with material and/or heat exchange processes as well as chemical reactions taking place or with it being possible for them to take place.

## Revendications

1. Contenant (2) comprenant un organe conducteur (1) pour un jet de liquide à dévier (30), au moyen duquel un liquide (3), après écoulement du contenant (2), peut être dévié vers une cible (5; 7) disposée sous le contenant, où la déviation a lieu au moyen d'au moins une plaque de matériau formée (10; 10a, 10b) qui est disposée en amont d'une ouverture de sortie (20) du contenant (2) et qui déforme et fait passer le jet de liquide (30) de telle sorte que le liquide (3) est amené à une extrémité inférieure (17) de la plaque de matériau formée à la cible,
**caractérisé en ce qu'**à l'emplacement devant l'ouverture de sortie (20), une première pièce plane (11) de la plaque de matériau (10, 10a) ainsi qu'une deuxième pièce plane (12) de la plaque de matériau identique ou d'une autre (10, 10b) forme une zone d'embouchure (13) dans laquelle la première pièce plane (11) dévie le liquide (3) relativement à la verticale transversalement, tandis que la deuxième pièce plane (12) est prévue comme collecteur d'éclaboussures, et **en ce que** la première pièce plane rejoint un canal (14) dans lequel le liquide est dévié vers le bas, où le canal (14) est séparé de la zone d'embouchure (13) par une paroi de la deuxième pièce plane (12).

2. Contenant selon la revendication 1, **caractérisé en ce que** la première pièce plane (11) est disposée par rapport à l'ouverture de sortie (20) de telle sorte que le jet de liquide sortant (30) heurte au moins approximativement tangentiellement la plaque de matériau (10) et traverse ensuite le canal (14) en forme d'hélice, et **en ce que** plus d'une ouverture de sortie (20a, 20b) peut être prévue, où celles-ci sont disposées en particulier verticalement les unes au-dessus des autres.

3. Contenant selon la revendication 1 ou 2,
**caractérisé en ce que** la plaque de matériau formée (10) - transversalement à la direction longitudinale du canal (14)
- présente une section transversale avec un profil en forme de spirale.

4. Contenant selon l'une des revendications 1 à 3, **caractérisé en ce que** la plaque de matériau formée (10) présente une section transversale qui, dans la direction longitudinale du canal (14), est réalisée au moins partiellement variable, où en particulier la première pièce plane présente au niveau de l'ouverture de sortie (20a, 20b) un bombement latéral (15) et/ou la section transversale retrécit vers le bas, et le retrécissement est prévu sur toute la hauteur dans la direction longitudinale ou seulement au voisinage de l'extrémité inférieure (17).

5. Contenant selon l'une des revendications 1 à 4, **caractérisé en ce qu'**il est formé par deux ou plusieurs plaques de matériau formées (10a, 10b, 10c).

6. Colonne à courant inverse avec des contenants (2) d'un organe de répartition de liquide selon l'une des revendications 1 à 5, à partir desquels le liquide (3) peut être réparti contre un flux de gaz (40) dirigé vers le haut sur un corps de remplissage (5) ou une section de corps de remplissage d'un garnissage de colonne, et auxquels sont disposés les organes directeurs devant des ouvertures de sortie (20), où des jets de liquide (30) sortant des ouvertures de sortie peuvent être déviés au moyen des organes directeurs d'une manière ciblée sur le corps de remplissage ou sur des éléments de répartition fine (7) disposés sur le corps de remplissage.

7. Colonne selon la revendication 6, **caractérisée en ce que** les zones d'embouchure (13) des organes directeurs (1) sont réalisées chacune comme un chemin courbé dont la largeur horizontale est plus grande que le diamètre de l'ouverture de sortie associée du contenant et/ou **en ce que** cette largeur est avantageusement approximativement identique au diamètre indiqué.

8. Colonne selon la revendication 6 ou 7,
**caractérisée en ce que** les organes directeurs (1) sont disposés d'une manière démontable aux contenants (2) de l'organe de répartition de liquide.

9. Colonne selon l'une des revendications 6 à 8, **caractérisée en ce qu'**un fond est disposé entre une section de corps de remplissage supérieure et une section de corps de remplissage inférieure, fond moyennant lequel du liquide de la section supérieure est recueilli dans un espace tampon et le liquide recueilli est réparti sur la section inférieure, **en ce que** des cheminées servent de passages pour un transport de gaz à travers l'espace tampon, et **en ce que** les organes directeurs sont disposés devant des ouvertures de sortie à l'intérieur des cheminées.

10. Utilisation d'une colonne selon l'une des revendications 6 à 9 ou d'un appareil avec des contenants selon l'une des revendications 1 à 5, pour l'exécution de processus dans l'industrie chimique et la pétrochimie ou par exemple pour une décomposition de mélanges de gaz, en particulier pour l'exécution d'une distillation, distillation réactive, absorption ou extraction, où des processus d'échange de matière et/ou de chaleur ainsi que des réactions chimiques ont lieu ou peuvent avoir lieu.
